# EUROPEAN PATENT SPECIFICATION

(11) **EP 3 192 370 B1**
(45) Date of publication and mention of the grant of the patent: **04.03.2020**
(21) Application number: 16151616.6
(22) Date of filing: 15.01.2016
(51) Int. Cl.: A01N 31/08, A01N 27/00, A01N 61/00, A01P 13/02, C05G 3/02

(54) **ENVIRONMENTALLY FRIENDLY HERBICIDAL FORMULATIONS**
UMWELTFREUNDLICHE HERBIZIDFORMULIERUNGEN
FORMULATIONS HERBICIDES ÉCOLOGIQUES

(43) Date of publication of application: 19.07.2017
(73) Proprietor: Rendapart, 9300 Aalst (BE)
(72) Inventor: KRAUCH, Frans, 1790 Hekelgem-Affligem (BE); KRAUCH, Pieter, 9300 Aalst (BE); VANTHOMME, Peter, 9300 Aalst (BE)
(74) Representative: Gevers Patents

(56) References cited:
- EP-A1- 2 687 095
- US-A1- 2008 125 321
- US-B1- 7 396 801
- US-B1- 7 396 801
- Anonymous: "Moss - Technical Leaflet", , 1 January 2008 (2008-01-01), pages 1-6, XP055276979, Retrieved from the Internet: URL:http://www.grassclippings.co.uk/Techni calLeafletMossandMossControl.pdf [retrieved on 2016-06-01]

## Description

### FIELD OF INVENTION

The present invention relates to an environmentally friendly herbicidal formulation wherein said formulation is simultaneously more effective in eliminating moss and fertilization of plants mixed in with or surrounding the moss, in particular stimulating (re)growth of grass. The present invention further relates to methods for manufacturing of the same and their use thereof.

### BACKGROUND OF THE INVENTION

Moss is a prevalent pest which spreads easily and grows in many undesirable areas such as turf grass, lawns, landscaping materials, wood, walls, roofing materials, monuments and the like. In addition to being a nuisance and eyesore in many situations, moss growth is too dense for desired plants and grasses in turf and other lawn and garden environments to compete with. Moss infestations are relatively easy to control with harsh chemicals but in areas which also contain desirable plants this is not an option as they are affected as well.

It is known that formulations including relatively high concentrations of heavy metal compounds such as notably ferrous sulphate and copper hydroxide are effective in eliminating moss. The drawbacks of such formulations is that they can cause damage to living environments and can cause staining if spilt or applied to hard surfaces such as concrete. Furthermore, they are relatively expensive due to the need of relatively high concentrations of said heavy metal compounds.

Moreover, these products are generally used for spot treatment. With spot treatment, the products are only applied locally on the most severally affected areas while beginning moss-infestations remain untreated. Drawbacks of this treatment are that it is labour intensive because the infected areas need to be checked regularly for new infestations, and in turn this often results to extensive use and thus overdosing. Environmental pollution, of for instance soil and water, resulting from extensive use of such synthetic pesticides has been recognized as a serious environmental problem. Furthermore, the public has become concerned about the amounts of residual chemicals that persist in food, ground water and the environment. It should also be mentioned that the legislation on the use of synthetic pesticides enforced by the environmental regulatory agencies tends to become more stringent in many countries.

Environmentally more friendly pesticidal formulations are notably described in WO 2006/116817. Said pesticidal formulation comprises one or more phenol and one or more isothyocyanates for treating pests such as arachnid, mollusc, protozoa, fungus, mold or any other form of unwanted living organism. The pesticidal formulation may be in the form of a solution, a suspension, or an emulsion, and may be in the form of a concentrate, a concentrate partially diluted in a carrier, or in a diluted ready to apply formulation. The one or more phenol in said formulation may be made synthetically or derived from natural sources. The aforementioned pesticidal formulation may be largely comprised of naturally occurring organic substances. However, the drawback of these formulations is that they only destroy unwanted plants (weeds).

US 20080125321 A1 describes a method and formulations to eliminate moss with oregano oil extract, thus a natural derived product. The oregano oil extract is applied to moss or to a locus where moss exists, preferably by spraying an aqueous solution which comprises no more than 2% oregano oil and one or more hydrocolloids in an amount of about 0.25% to about 25%. Said hydrocolloids include agar, alginates, acacia, arabinogalactan, caragum, carrageenan, chicory, guar, pectin, inulin or xanthum. In the working embodiments, the formulations were only applied as spot treatments on putting greens. The formulations of US 20080125321 A1 also suffer from the drawbacks that they only eliminate moss and additionally damage plants mixed in with the moss.

Instead of using any chemical formulations, manual methods of moss removal from grass are indeed an option. For example, one can rake out the moss in a lawn or turf and reseed with grass. However, these methods are very time-consuming and also damage the lawn as well.

Presently, none of the known commercial products or the products described in the literature are formulations derived from natural products which effectively eliminate moss over a broad area without damaging desirable plants.

Accordingly, there is a further need to provide improved formulations which are simultaneously more effective in eliminating moss and fertilize the desirable plants mixed in with or surrounding the moss, in particular stimulate the (re)growth of grass, while being environmentally friendly and economically favourable. There is also a further need that said formulations are easily applicable and can treat both well evolved as newly initiated moss-infestations, while causing minimal damage to desirable plants which are mixed in with or surrounding the moss.

### SUMMARY OF THE INVENTION

The Applicant has now surprisingly found that it is possible to provide a formulation fulfilling the above mentioned needs.

Thus, the primary object of the present invention is a formulation [formulation (F), herein after] suitable for the elimination of moss and fertilizing the desirable plants mixed in with or surrounding the moss as defined according to claim 1.

It is a further object of the present invention to provide methods for manufacturing said formulation (F).

It is also a further object of the present invention to provide uses of said formulation (F).

### FORMULATION (F)

Within the context of the present invention, the expression "at least one composition [composition (C), herein after]" is intended to denote one or more than one composition (C). Mixtures of compositions (C) can also be used for the purpose of the invention. The expression "at least one compound of general formula (Iₐ) [compound (A), herein after]", is intended to denote one or more than one compound (A). Mixtures of compounds (A) can also be used for the purpose of the invention.

In the rest of the text, the expressions "composition (C)" and "compound (A)" are understood, for the purposes of the present invention, both in the plural and the singular, that is to say the formulation (F) of the present invention may comprise one or more than one composition (C) and composition (C) may comprise one or more than one compound (A).
As used herein the term "alkyl", "alkenyl" and "alkynyl" have the broadest meaning generally understood in the art, and may include a moiety which is linear, branched, cyclic or a combination thereof, alkenyl and alkynyl groups may contain from one to twelve carbon atoms.

The inventors have surprisingly found that by using one or more composition (C), in combination with at least one fertilizer (Z), the resulting herbicidal formulation (F) is very effective in the simultaneous elimination of moss and fertilization of desirable plants mixed in with or surrounding the moss, in particular in stimulating the (re)growth of grass. The inventors have surprisingly found that the fertilizer (Z) synergistically enhances the effect of composition (C) on the elimination of moss while causing minimal damage to desirable plants mixed in with or surrounding the moss and in fact simultaneously provide a fertilizer to said desirable plants.

It is understood that the term "effectively eliminate moss" means an inhibition of moss growth or even a complete eradication of the moss infestation.

Preferred compounds (A) in composition (C) of the formulation (F) are of formula (Iₐ₎ herein below: 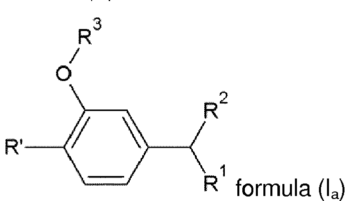 wherein
R³ is independently selected from hydrogen; -C(O)-R^{α} wherein R^{α} is methyl, ethyl, propyl or isopropyl, most preferably, R^{α} is a methyl group; methyl, ethyl, propyl or isopropyl, most preferably, a methyl group; most preferably R³ is hydrogen;
R' is independently selected from an alkyl group having 1 to 4 carbon atoms;
R¹ and R², equal to or different from each other, are independently selected from an alkyl group having 1 to 6 carbon atoms.

R' is independently selected from methyl, ethyl, propyl or isopropyl. Most preferably, R' is a methyl group.

R¹ and R², equal to or different from each other, are independently selected from an alkyl group having 1 to 4 carbon atoms. Even more preferably R¹ and R², equal to or different from each other, are independently selected from methyl, ethyl, propyl or isopropyl. Most preferably, R¹ and R² are methyl groups.

Compound (A) of the present invention may be derived from natural sources or be chemically synthesized. Said synthesis of compound (A) may be carried out using conventional methods known to the skilled in the art.

As said, the weight percent of the compound (A), as detailed above, relative to the total weight of formulation (F) is advantageously equal to or at least 0.4 wt. %, preferably equal to or at least 0.6 wt. %, more preferably equal to or at least 0.8 wt. %.

It is further understood that the upper limit of the weight percent of the compound (A), relative to the total weight of formulation (F) is not restricted. However, the compound (A) is advantageously present in an amount equal to or less than 50 wt. %, preferably equal to or less than 40 wt. %, more preferably equal to or less than 30 wt. %, more preferably equal to or less than 25 wt. %, even more preferably equal to or less than 20 wt. %, relative to the total weight of the formulation (F).

According to certain embodiments of the present invention, composition (C) may further comprise at least one compound of general formula (IIₐ) [compound (B), herein after]: 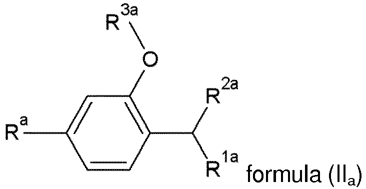 wherein
- R^{3a} is independently selected from hydrogen; -C(O)-R^{αa} wherein R^{αa} is an alkyl group having 1 to 4 carbon atoms, even more preferably, R^{αa} is methyl, ethyl, propyl or isopropyl, most preferably, R^{αa} is a methyl group; an alkyl group having 1 to 4 carbon atoms, even more preferably, methyl, ethyl, propyl or isopropyl, most preferably, a methyl group; Most preferably R^{3a} is hydrogen;
- R^{a} is independently selected from an alkyl group having 1 to 4 carbon atoms;
- R^{1a} and R^{2a}, equal to or different from each other, are independently selected from an alkyl group having 1 to 6 carbon atoms;

In a preferred embodiment of the formulation (F) according to the present invention, R^{a} in compound (B) of general formula (IIₐ), is independently selected from methyl, ethyl, propyl or isopropyl. Most preferably, R^{a} is a methyl group.

In a preferred embodiment of the formulation (F) according to the present invention, R^{1a} and R^{2a} in compound (B) of general formula (IIₐ), equal to or different from each other, are independently selected from an alkyl group having 1 to 4 carbon atoms. More preferably R^{1a} and R^{2a}, equal to or different from each other, are independently selected from methyl, ethyl, propyl or isopropyl. Most preferably, R^{1a} and R^{2a} are methyl groups.

Compound (B) of the present invention may be derived from natural sources or be chemically synthesized. Said synthesis of compound (B) may be carried out using conventional methods known to the skilled in the art.

According to other embodiments, composition (C) may further comprise at least one compound of general formula (IIIₐ) [compound (D), herein after]: 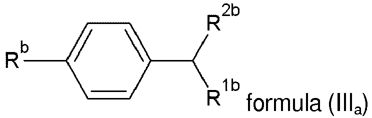 wherein
- R^{b} is independently selected from an alkyl group having 1 to 4 carbon atoms;
- R^{1b} and R^{2b}, equal to or different from each other, are independently selected from an alkyl group having 1 to 6 carbon atoms;

In a preferred embodiment of the formulation (F) according to the present invention, R^{b} in compound (D) of general formula (IIIₐ), is independently selected from methyl, ethyl, propyl or isopropyl. Most preferably, R^{b} is a methyl group.

In a preferred embodiment of the formulation (F) according to the present invention, R^{1b} and R^{2b} in compound (D) of general formula (IIIₐ), equal to or different from each other, are independently selected from an alkyl group having 1 to 4 carbon atoms. More preferably R^{1b} and R^{2b}, equal to or different from each other, are independently selected from methyl, ethyl, propyl or isopropyl. Most preferably, R^{1b} and R^{2b} are methyl groups.

Compound (D) of the present invention may be derived from natural sources or be chemically synthesized. Said synthesis of compound (D) may be carried out using conventional methods known to the skilled in the art.

According to certain embodiments of the present invention, composition (C) may further comprise at least one of other ingredients [ingredient (I_{C}), herein after]. Non-limiting examples of this ingredient (I_{C}) notably include γ-terpinene, 3-caryophyllene, α-thujene, α-pinene, camphene, sabinene, β-pinene, β-myrcene, α-Terpinene, limonene, cis-ocimene, trans-ocimene, linalool, pinocamphone, borneol, isopinocamphone, terpin-4-ol, α-terpineol, β-bourbonene, germacrene-D, spathulenol and caryophyllene oxide.

Ingredient (I_{C}) of the present invention may be derived from natural sources or be chemically synthesized. Said synthesis of Ingredient (I_{C}) may be carried out using conventional methods known to the skilled in the art.

Composition (C) of the present invention comprising compound (A), optionally compound (B), optionally compound (D) and optionally ingredient (I_{C}) may be derived from natural sources, such as notably plant extracts. Alternatively, at least one of the compounds (e.g. compound (A), compound (B), compound (D), ingredient (I_{C})) may be prepared chemically. The synthesis of compound (A), and when present of compound (B), compound (D), ingredient (I_{C}), in composition (C) may be carried out using conventional methods known to the skilled in the art.

Non limiting examples of such plant extracts include, but are not limited to, extracts of wild plants, ruderal located plants and man-made cultivars or their improved species. Among plant extracts mention may be notably made of extracts of Allium sp., Aloysia sp., Anethum sp., Anthriscus sp., Armorica sp., Artemisia sp., Borago sp., Capsicum sp., Carum sp., Chamaemelum sp., Chelidonium sp., Coriandrum sp., Cymbopogon sp., Foeniculum sp., Hyssopus sp., Lavandula sp., Laurus sp., Levisticum sp., Lippia sp., Melissa sp., Mentha sp., Monarda sp., Myrrhis sp., Ocimum sp., Origanum sp., Pelargonium sp., Pimpinella sp., Rosmarinus sp., Ruta sp., Salvia sp., Sanguisorba sp., Satureja sp., Thymus sp., Valeriana sp..

According to a preferred embodiment of the present invention, the weight percent of compound (A), as detailed above, relative to the total weight of composition (C) is advantageously equal to or at least 40 wt. %, preferably equal to or at least 50 wt. %, preferably equal to or at least 60 wt. %, preferably equal to or at least 70 wt. %, more preferably equal to or at least 75 wt. %, even more preferably equal to or at least 80 wt. %, most preferably equal to or at least 82 wt. %.

It is further understood that the weight percent of compound (A), relative to the total weight of composition (C) is advantageously equal to or less than 99.9 wt. %, preferably equal to or less than 99.5 wt. %, more preferably equal to or less than 99 wt. %, more preferably equal to or less than 98.5 wt. %, even more preferably equal to or less than 98 wt. %.

Good results were obtained when the weight percent of compound (A), relative to the total weight of composition (C) is between 82 wt. % - 98 wt. %.

If desired, composition (C) may consist essentially of compound (A).

For the purpose of the present invention, the expression "consist essentially of" is intended to denote that any additional ingredient different from compound (A), as detailed above, is present in an amount of at most 1 wt. %, relative to the total weight of composition (C).

Generally, when present, the weight percent of compound (B), as detailed above, relative to the total weight of composition (C), is equal to or less than 60 wt. %, preferably equal to or less than 50 wt. %, preferably equal to or less than 40 wt. %, preferably equal to or less than 35 wt. %, more preferably equal to or less than 30 wt. %, even more preferably equal to or less than 25 wt. %, most preferably equal to or less than 20 wt. %.

It is further understood that, the lower limit of the weight percent of compound (B), relative to the total weight of composition (C), is not restricted but advantageously is equal to or greater than 0.01 wt. %, preferably, equal to or greater than 0.05 wt. %, more preferably, equal to or greater than 1 wt. %, more preferably, equal to or greater than 5 wt. %, more preferably equal to or greater than 10 wt. %, even more preferably equal to or greater than 12.5 wt. %; most preferably equal to or greater than 15 wt. %.

When composition (C) is derived from natural sources, compound (B) is generally present in lower amounts.

Specifically, when present, the weight percent of compound (B), as detailed above, relative to the total weight of composition (C), is advantageously equal to or less than 10 wt. %, preferably equal to or less than 8 wt. %, more preferably equal to or less than 6 wt. %, more preferably equal to or less than 5 wt. %, more preferably equal to or less than 4 wt. %, even more preferably equal to or less than 3.5 wt. %, most preferably equal to or less than 3 wt. %.

It is further understood that, when present, the weight percent of compound (B), relative to the total weight of composition (C), is advantageously equal to or greater than 0.01 wt. %, preferably, equal to or greater than 0.05 wt. %, more preferably equal to or greater than 0.1 wt. %, more preferably equal to or greater than 0.3 wt. %; even more preferably equal to or greater than 0.7 wt. %; most preferably equal to or greater than 1 wt. %.

Generally, when present, the weight percent of compound (D), as detailed above, relative to the total weight of composition (C), is equal to or less than 60 wt. %, preferably equal to or less than 50 wt. %, preferably equal to or less than 40 wt. %, preferably equal to or less than 35 wt. %, more preferably equal to or less than 30 wt. %, even more preferably equal to or less than 25 wt. %, most preferably equal to or less than 20 wt. %.

It is further understood that, the lower limit of the weight percent of compound (D), relative to the total weight of composition (C), is not restricted but advantageously equal to or greater than 0.01 wt. %, preferably, equal to or greater than 0.05 wt. %, more preferably, equal to or greater than 1 wt. %, preferably, equal to or greater than 5 wt. %, more preferably equal to or greater than 10 wt. %, even more preferably equal to or greater than 12.5 wt. %, most preferably equal to or greater than 15 wt. %.

When composition (C) is derived from natural sources, compound (D) is generally present in lower amounts.

Specifically, when present, the weight percent of compound (D), as detailed above, relative to the total weight of composition (C), is advantageously equal to or less than 15 wt. %, preferably equal to or less than 12 wt. %, more preferably equal to or less than 10 wt. %, more preferably equal to or less than 7 wt. %, more preferably equal to or less than 6 wt. %, even more preferably equal to or less than 5 wt. %, most preferably equal to or less than 4 wt. %.

It is further understood that, when present, the weight percent of compound (D), relative to the total weight of composition (C), is advantageously equal to or greater than 0.01 wt. %, preferably, equal to or greater than 0.05 wt. %, more preferably, equal to or greater than 0.1 wt. %, more preferably equal to or greater than 0.5 wt. %, more preferably equal to or greater than 1 wt. %, even more preferably equal to or greater than 1.5 wt. %; most preferably equal to or greater than 2 wt. %.

Generally, when present, the weight percent of ingredient (I_{C}), as detailed above, relative to the total weight of composition (C), is advantageously equal to or less than 25 wt. %, preferably equal to or less than 20 wt. %, more preferably equal to or less than 15 wt. %, even more preferably equal to or less than 13 wt. %, most preferably equal to or less than 11 wt. %.

It is further understood that, when present, the weight percent of ingredient (I_{C}), relative to the total weight of composition (C), is advantageously equal to or greater than 0.1 wt. %, preferably, equal to or greater than 1 wt. %, more preferably equal to or greater than 2 wt. %, even more preferably equal to or greater than 3 wt. %, most preferably equal to or greater than 4 wt. %.

According to a preferred embodiment of the present invention, the composition (C), comprised in the formulation (F) of the present invention, comprises:
- 60 wt. % - 98 wt. % of at least one compound (A) of general formula (Iₐ), as defined above,
- 0.01 wt. % - 35 wt. % of at least one compound (B) of general formula (IIₐ), as defined above,
- 0.01 wt. % - 35 wt. % of at least one compound (D) of general formula (IIIₐ), as defined above,
- 0.1 wt. % - 25 wt. % of at least one ingredient (I_{c})
all wt. % are relative to the total weight of the composition (C).

It is further understood that all definitions and preferences as described above equally apply for this embodiment and all further embodiments, as described below.

As said, the amount of compound (A) need to be equal to or more than 0.4 wt. %, preferably equal to or at least 0.6 wt. %, more preferably equal to or at least 0.8 wt. %, relative to the total weight of the formulation (F). This being said, the amount of the composition (C), as detailed above, relative to the total weight of the formulation (F) also need to be equal to or more than 0.4 wt. %, preferably equal to or at least 0.6 wt. %, more preferably equal to or at least 0.8 wt. %, relative to the total weight of the formulation (F).

It is further understood that the upper limit of the weight percent of composition (C), relative to the total weight of formulation (F) is not restricted but advantageously equal to or less than 50 wt. %, preferably equal to or less than 40 wt. %, more preferably equal to or less than 30 wt. %, more preferably equal to or less than 25 wt. %, even more preferably equal to or less than 20 wt. %.

The fertilizer (Z) is an organic fertilizer [organic fertilizer (Z_{O}), herein after] or an organo-mineral fertilizer [fertilizer (Z_{OM}), herein after]. Said organic fertilizer (Z_{O}) and organo-mineral fertilizer (Z_{OM}) typically comprise compounds comprising nitrogen atoms and/or phosphorus atoms and/or potassium atoms or mixtures thereof.

For the purpose of our invention, the content of nitrogen atoms, phosphorus atoms and potassium atoms comprised in the fertilizer (Z) of the present invention is indicated by the N-P-K value, wherein N is nitrogen content by weight percentage, P is phosphorus content by weight percentage and K is potassium content by weight percentage, all weight percentages relative to the total weight of the fertilizer (Z). The content of nitrogen atoms, phosphorus atoms, and potassium atoms are calculated as that of elemental nitrogen atom, P₂O₅ and K₂O respectively.

By way of example, a fertilizer (Z) having a N-P-K value of 16-4-8 refers to a fertilizer comprising nitrogen atoms in amount of 16 wt. % N, phosphorus atoms in an amount corresponding to an amount of 4 wt. % of P₂O₅, and potassium atoms in an amount corresponding to an amount of 8 wt. % K₂O, all wt. % relative to the total weight of the fertilizer (Z).

For the purpose of this invention, the term "organic fertilizers" is intended to refer to fertilizers derived from natural components of animal or/and vegetable origin.

For the purpose of this invention, the term "organo- mineral fertilizers" is intended to refer to organic fertilizers, as defined above, which were enriched with mineral nutrients such as but not limited to urea, potassium nitrate, superphosphate, ammonium sulfate, mono-ammonium phosphate, di-ammonium phosphate, potassium sulfate, potassium chloride, magnesium sulfate, magnesium oxide, trace elements such as boron, copper, iron, manganese, molybdenum or zinc.

In the present invention, organic fertilizer (Z_{O}) is chosen among the group of organic fertilizers with a high nitrogen content [N-rich organic fertilizer (Z_{O}^{N}), herein after]. Said N-rich organic fertilizers (Z_{O}^{N}) are known to those skilled in the art of lawn and turf maintenance.

For the purpose of the invention, the term "organic fertilizers with a high nitrogen content" is intended to denote fertilizers in which the weight ratio of nitrogen atoms to phosphorus atoms and potassium atoms respectively, is equal to or at least 2. The content of nitrogen atoms, phosphorus atoms, and potassium atoms are calculated as that of elemental nitrogen atom, P₂O₅ and K₂O respectively.

Among N-rich organic fertilizers (Z_{O}^{N}) mention may be notably made of blood meal, hoof and horn meal, cottonseed meal, feather meal, leather meal, hair meal, meat meal, cocoa shells, coffee husks, soybean meal and seaweed meal.

The following commercially available N-rich organic fertilizers (Z_{O}^{N}) are typical examples of N-rich organic fertilizers (Z_{O}^{N}) suitable for use in the formulation (F) of the present invention: VIANO BLOOD MEAL 13%N; VIANO HOOF & HORNMEAL 13%N.

In the present invention, organic fertilizer (Z_{O}) is chosen among the group of organic fertilizers with a high phosphorus content [P-rich organic fertilizer (Z_{O}^{P}), herein after]. Said P-rich organic fertilizers (Z_{O}^{P}) are known to those skilled in the art of lawn and turf maintenance.

For the purpose of the invention, the term "organic fertilizers with a high phosphorus content" is intended to denote fertilizers in which the weight ratio of phosphorus atoms to nitrogen atoms and potassium atoms respectively, is equal to or at least 2. The content of nitrogen atoms, phosphorus atoms, and potassium atoms are calculated as that of elemental nitrogen atom, P₂O₅ and K₂O respectively.

Among P-rich organic fertilizers (Z_{O}^{P}) mention may be notably made of meat and bone meal, degelatinised bone meal and bone bicalciumphosphate.

Non limitative examples of commercially available P-rich organic fertilizers (Z_{O}^{P}) suitable for use in the formulation (F) of the present invention include: VIANO BONE MEAL 16% P₂0₅, 6 %N.

In the present invention, organic fertilizer (Z_{O}) is chosen among the group of organic fertilizers with a high potassium content [K-rich organic fertilizer (Z_{O}^{K}), herein after]. Said K-rich organic fertilizers (Z_{O}^{K}) are known to those skilled in the art of lawn and turf maintenance.

For the purpose of the invention, the term "organic fertilizers with a high potassium content" is intended to denote fertilizers in which the weight ratio of potassium atoms to nitrogen atoms and phosphorus atoms respectively, is equal to or at least 2. The content of nitrogen atoms, phosphorus atoms, and potassium atoms are calculated as that of elemental nitrogen atom, P₂O₅ and K₂O respectively.

Among K-rich organic fertilizers (Z_{O}^{K}) mention may be notably made of vinasse, greensand, wood ash and kelp meal.

For the purpose of the present invention the term "vinasse" means a solution originating from bioethanol production, alcohol production, sugar production, fermentation process or yeast production, preferably from yeast production. The raw material for vinasse is typically corn, sugar cane or sugar beet. A review describing vinasse is available notably from Renato de Mello Prado et al. (Applied and Environmental Soil Science, vol. 2013, 2013, 8 pages), the whole content of which is herein incorporated by reference.

Non limitative examples of commercially available K-rich organic fertilizers (Z_{O}^{K}) suitable for use in the formulation (F) of the present invention include: VIANO VINASSE 38% K2O; VIANO TURFPROF POTASH 0-0-32; VIANO BIOLICQ 3-0-6.

In the present invention, organo-mineral fertilizer (Z_{OM}) is chosen among the group of organo-mineral fertilizers with a high nitrogen content [N-rich organo-mineral fertilizer (Z_{OM}^{N}), herein after]. Said N-rich organo-mineral fertilizers (Z_{OM}^{N}) are known to those skilled in the art of lawn and turf maintenance.

For the purpose of the invention, the term "organo-mineral fertilizers with a high nitrogen content" is intended to denote fertilizers in which the weight ratio of nitrogen atoms to phosphorus atoms and potassium atoms respectively, is equal to or at least 2. The content of nitrogen atoms, phosphorus atoms, and potassium atoms are calculated as that of elemental nitrogen atom, P₂O₅ and K₂O respectively.

The following commercially available N-rich organo-mineral fertilizers (Z_{OM}^{N} ) are typical examples of N-rich organo-mineral fertilizers (Z_{OM}^{N}) suitable for use in the formulation (F) of the present invention: VIANO LAWN FERTILISER 9-3-3 (+3MgO); VIANO LAWN BOOSTER 12-3-3 (+3MgO); VIANO LAWN 2 in 1 9-3-3 (+3MgO); VIANO LAWN 4 in 1 9-3-3 (+3MgO); VIANO TURFPROF GREEN BOOST 16-3-8 (+2MgO) + 1 Fe + bacteria; VIANO TURFPROF START 18-3-3.

In the present invention, organo-mineral fertilizer (Z_{OM}) is chosen among the group of organo-mineral fertilizers with a high phosphorus content [P-rich organo-mineral fertilizer (Z_{OM}^{P}), herein after]. Said P-rich organo-mineral fertilizers (Z_{OM}^{P}) are known to those skilled in the art of lawn and turf maintenance.

For the purpose of the invention, the term "organo-mineral fertilizers with a high phosphorus content" is intended to denote fertilizers in which the weight ratio of phosphorus atoms to nitrogen atoms and potassium atoms respectively, is equal to or at least 2. The content of nitrogen atoms, phosphorus atoms, and potassium atoms are calculated as that of elemental nitrogen atom, P₂O₅ and K₂O respectively.

Non limitative examples of commercially available P-rich organo-mineral fertilizers (Z_{OM}^{P}) suitable for use in the formulation (F) of the present invention include: VIANO MIXPROF FOS 5-25-0.

In a more preferred embodiment of the present invention, organo-mineral fertilizer (Z_{OM}) is chosen among the group of organo-mineral fertilizers (Z_{OM}) with a high potassium content [K-rich organo-mineral fertilizer (Z_{OM}^{K}), herein after]. Said K-rich organo-mineral fertilizers (Z_{OM}^{K} ) are known to those skilled in the art of lawn and turf maintenance.

For the purpose of the invention, the term "organo-mineral fertilizers with a high potassium content" is intended to denote fertilizers in which the weight ratio of potassium atoms to nitrogen atoms and phosphorus atoms respectively, is equal to or at least 2. The content of nitrogen atoms, phosphorus atoms, and potassium atoms are calculated as that of elemental nitrogen atom, P₂O₅ and K₂O respectively.

Non limitative examples of commercially available K-rich organo-mineral fertilizer (Z_{OM}^{K}) suitable for use in the formulation (F) of the present invention include: VIANO IWTM 5-5-20 (+3MgO); VIANO AROMATIC PLANT FOOD 5-6-13 (+4MgO); VIANO LEGUMA 5-6-13 (+4MgO); VIANO CONIFER- & TAXUS FOOD 5-6-13 (+4MgO); VIANO BOXWOOD PLANT FOOD 5-6-13 (+4MgO); VIANO HORTENSIA PLANT FOOD 5-6-13 (+4MgO); VIANO AUTUMN TREATMENT 6-6-16 (+2MgO); VIANO TURFPROF AUTUMN 5-5-20 (+3MgO)

According to one embodiment of the present invention, the weight percent of the fertilizer (Z), as detailed above, relative to the total weight of the formulation (F) is generally equal to or at least 50 wt. %, preferably equal to or at least 60 wt. %, preferably equal to or at least 70 wt. %, more preferably equal to or at least 75 wt. %, most preferably equal to or at least 80 wt. %.

It is further understood that the weight percent of the fertilizer (Z), as detailed above, relative to the total weight of the formulation (F) is generally equal to or less than 99.6 wt. %, preferably equal to or less than 99.4 wt. %, more preferably equal to or less than 99.2 wt. %.

The fertilizer (Z) of the present invention, as detailed above, may be a liquid fertilizer or a solid fertilizer.

In one embodiment of the present invention, the fertilizer (Z) is a liquid fertilizer [liquid fertilizer (Z_{L}) herein after].

For the purpose of the present invention, the term "liquid fertilizer" is intended to refer to a fertilizer is the form of a solution, a dispersion such as notably an emulsion and a suspension, a foam, preferably in the form of a solution.

According to a particular embodiment of the present invention, when the fertilizer (Z) is a liquid fertilizer (Z_{L}), the weight percent of the compound (A), as detailed above, relative to the total weight of formulation (F) is advantageously equal to or at least 0.4 wt. %, preferably equal to or at least 0.8 wt. %, more preferably equal to or at least 1.2 wt. %, even more preferably equal to or at least 1.6 wt. %, most preferably equal to or at least 2 wt. %.

It is further understood that the weight percent of the compound (A), relative to the total weight of formulation (F) is advantageously equal to or less than 50 wt. %, preferably equal to or less than 40 wt. %, more preferably equal to or less than 30 wt. %, more preferably equal to or less than 25 wt. %, even more preferably equal to or less than 20 wt. %.

Good results were obtained when the weight percent of the compound (A), relative to the total weight of formulation (F) is between 2 wt. % - 20 wt. %.

Accordingly, when the fertilizer (Z) is a liquid fertilizer (Z_{L}), the weight percent of the composition (C), as detailed above, relative to the total weight of the formulation (F) is advantageously equal to or at least 0.4 wt. %, preferably equal to or at least 0.8 wt. %, more preferably equal to or at least 1.2 wt. %, even more preferably equal to or at least 1.6 wt. %, most preferably equal to or at least 2 wt. %.

It is further understood that the upper limit of the weight percent of composition (C), relative to the total weight of formulation (F) is not restricted.

As to the fact that preferred compositions (C), as described above, comprises from 60 wt. % to 98 wt. % of compound (A), as detailed above, the weight percent of composition (C), relative to the total weight of formulation (F) is generally equal to or less than 50 wt. %, preferably equal to or less than 40 wt. %, more preferably equal to or less than 30 wt. %, more preferably equal to or less than 25 wt. %, even more preferably equal to or less than 20 wt. %.

Accordingly, when the fertilizer (Z) is a liquid fertilizer (Z_{L}), the weight percent of the liquid fertilizer (Z_{L}), as detailed above, relative to the total weight of the formulation (F) is generally equal to or at least 50 wt. %, preferably equal to or at least 60 wt. %, preferably equal to or at least 70 wt. %, more preferably equal to or at least 75 wt. %, most preferably equal to or at least 80 wt. %.

It is further understood that the weight percent of the liquid fertilizer (Z_{L}), as detailed above, relative to the total weight of the formulation (F) is generally equal to or less than 99.6 wt. %, preferably equal to or less than 99.2 wt. %, more preferably equal to or less than 98.8 wt. %, more preferably equal to or less than 94 wt. %, even more preferably equal to or less than 98.4 wt. %, most preferably equal to or less than 98 wt. %.

Good results were obtained when the weight percent of composition (C), relative to the total weight of the formulation (F), is between 2 wt. % - 20 wt. % and the weight percent of the liquid fertilizer (Z_{L}), relative to the total weight of the formulation (F), is between 80 wt. % - 98 wt. %.

In another embodiment of the present invention the fertilizer (Z) is a solid fertilizer [solid fertilizer (Z_{S}) herein after].

For the purpose of the present invention, the term "solid fertilizer" is intended to refer to a fertilizer in the form of powders, dusts, tablets, pellets, or a granular form such as granules, microcrumbs and regular crumbs or mixtures thereof, preferably a granular form.

For the purpose of the present invention, the term "granules" is intended to refer to particles of any shape and any density with a size of at least 2.5 mm, preferably at least 2.9 mm, more preferably at least 3.2 mm, most preferably at least 3.5 mm.

It is further understood that, the upper limit of the size of the granules is not restricted but advantageously equal to or less than 9 mm, preferably equal to or less than 8 mm, more preferably equal to or less than 7.5 mm, most preferably equal to or less than 7 mm.

For the purpose of the present invention, the term "microcrumbs" is intended to refer to particles of any shape and any density with a size of at least 0.1 mm, preferably at least 0.3 mm, more preferably at least 0.5 mm, most preferably at least 0.7 mm.

It is further understood that, the upper limit of the size of the microcrumbs is advantageously equal to or less than 3 mm, preferably equal to or less than 2.7 mm, more preferably equal to or less than 2.5 mm, even more preferably equal to or less than 2.3 mm, most preferably equal to or less than 2.1 mm.

For the purpose of the present invention the term "regular crumbs", is meant to refer to particles of any shape and any density with a size of at least 1.0 mm, preferably at least 1.5 mm, more preferably at least 1.9 mm, most preferably at least 2.1 mm.

It is further understood that, the upper limit of the size of the regular crumbs is advantageously equal to or less than 5 mm, preferably equal to or less than 4.5 mm, more preferably equal to or less than 4.1 mm, even more preferably equal to or less than 3.8 mm, most preferably equal to or less than 3.5 mm.

Generally, particle sizes such as the size of granules, microcrumbs and regular crumbs as defined above, may be measured by known methods in the art, in particular by sieving with screens as notably described in ISO 8397:1988, the whole content of which is herein incorporated by reference.

It is understood that the particle size expressed in mm refers to the median (or geometric mean) of the particle sizes corresponding to P(X<x) = 50 wt. %, wherein X is the particle size expressed in mm, P is the percentage by weight of particles smaller than the sieve screen size x expressed in mm, relative to the total weight of the sieved sample.

According to a particular embodiment of the present invention, when the fertilizer (Z) is a solid fertilizer (Z_{S}), the weight percent of compound (A), as detailed above, relative to the total weight of formulation (F) is advantageously equal to or at least 0.4 wt. %, preferably equal to or at least 0.5 wt. %, more preferably equal to or at least 0.6 wt. %, even more preferably equal to or at least 0.7 wt. %most preferably equal to or at least 0.8 wt. %.

It is further understood that the weight percent of compound (A), relative to the total weight of formulation (F) is advantageously equal to or less than 20 wt. %, preferably equal to or less than 18 wt. %, more preferably equal to or less than 17 wt. %, more preferably equal to or less than 16 wt. %, even more preferably equal to or less than 15 wt. %.

Good results were obtained when the weight percent of compound (A), relative to the total weight of formulation (F) is between 0.4 wt. % - 15 wt. %.

Accordingly, when the fertilizer (Z) is a solid fertilizer (Z_{S}), the weight percent of the composition (C), as detailed above, relative to the total weight of the formulation (F) is advantageously equal to or at least 0.4 wt. %, preferably equal to or at least 0.5 wt. %, more preferably equal to or at least 0.6 wt. %, even more preferably equal to or at least 0.7 wt. %most preferably equal to or at least 0.8 wt. %.

It is further understood that the upper limit of the weight percent of composition (C), relative to the total weight of formulation (F) is not restricted.

As to the fact that preferred compositions (C), as described above, comprises from 60 wt. % to 98 wt. % of compound (A), as detailed above, the weight percent of composition (C), relative to the total weight of formulation (F) is generally equal to or less equal to or less than 18 wt. %, more preferably equal to or less than 17 wt. %, more preferably equal to or less than 16 wt. %, even more preferably equal to or less than 15 wt. %.

Accordingly, when the fertilizer (Z) is a solid fertilizer (Z_{S}), the weight percent of the solid fertilizer (Z_{S}), as detailed above, relative to the total weight of the formulation (F) is generally equal to or at least 80 wt. %, preferably equal to or at least 82 wt. %, preferably equal to or at least 83 wt. %, more preferably equal to or at least 84 wt. %, most preferably equal to or at least 85 wt. %.

It is further understood that the weight percent of the solid fertilizer (Z_{S}), as detailed above, relative to the total weight of the formulation (F) is generally equal to or less than 99.6 wt. %, preferably equal to or less than 99.5 wt. %, more preferably equal to or less than 99.4 wt. %, more preferably equal to or less than 99.3 wt. %, most preferably equal to or less than 99.2 wt. %.

According to certain other embodiments the formulation (F) of the present invention may further comprise other common additional ingredients [ingredient (I_{F}), herein after] to enhance the appearance, storage, transport, handling and/or performance of the product. Said ingredients (I_{F}) are known to those skilled in the art of agricultural or turf management chemical compositions. Typical ingredients (I_{F}) may include, but are not limited to, suspending agents and similar ingredients to enhance the shelf life of the product, colorants, fragrances, solvents, thinning agents and thickening agents, secondary nutrients such as but not limited to sources of calcium, magnesium and sulfur, micronutrients such as but not limited to sources of boron, cobalt, iron, manganese, molybdenum, zinc, and copper, any material that facilitates the application of formulation (F) such as spreading or sticking agents and any other materials customarily employed in formulating pesticides, herbicides, miticides or fungicides, especially plant protection agents, such as other herbicides, pesticides, insecticides, miticides, acaricides, nematicides, fungicides, bactericides, rodenticides and growth-regulating agents.

Typically, the amount of the ingredient (I_{F}), when present, is from 0.1 wt. % to 20 wt. %, more preferably from 0.1 wt. % to 10 wt %, most preferably from 0.1 wt. % to 5 wt. %, relative to the total weight of the formulation (F).

The formulation (F) of the present invention may be a liquid formulation or a solid formulation.

In one preferred embodiment of the present invention, the formulation (F) is a liquid formulation [liquid formulation (F_{L}), herein after] comprising the at least one composition (C), as defined above, and the at least one fertilizer (Z), as defined above.

For the purpose of the present invention, the term "liquid formulation" is intended to refer to a formulation in the form of a dispersion such as notably an emulsion and a suspension, a foam, preferably in the form of a dispersion, more preferably the dispersion is an emulsion.

In another aspect, the present invention also relates to a diluted liquid formulation obtained by diluting the liquid formulation (F_{L}), as defined above, with a diluent [diluent (dil), herein after], wherein the weight ratio of liquid formulation (F_{L}) to diluent (dil) is between 1:8 to about 1:25.

Among diluents (dil) suitable for use in the present invention mention may be notably made of water and water-based solutions.

For the purpose of the present inventions the term "water-based solutions" is intended to refer to solutions comprising water and at least one component selected from the group of biostimulants, salts, herbicides, pesticides, insecticides, miticides, acaricides, nematicides, fungicides, bactericides, rodenticides and growth-regulating agents.

In another preferred embodiment of the present invention, the formulation (F) is in the form of a solid formulation [solid formulation (F_{S}), herein after] comprising the at least one composition (C), as detailed above, and the at least one fertilizer (Z), as detailed above.

For the purpose of the present invention, the term "solid formulation" is intended to refer to a formulation in the form of powders, dusts, tablets, pellets, or a granular form such as granules, microcrumbs and regular crumbs or mixtures thereof.

The terms "granules", "microcrumbs" and "regular crumbs" have the same meaning as defined here above.

In a more preferred embodiment of the present invention, the formulation (F) is in a granular form [granular formulation (F_{G}), herein after] comprising the at least one composition (C), as defined above, and the at least one fertilizer (Z), as defined above.

In one embodiment of the present invention, the at least one composition (C), as defined above, and the at least one fertilizer (Z), as defined above, are uniformly distributed within the granular formulation (F_{G}).

In another more preferred embodiment of the present invention, the granular formulation (F_{G}) is heterogeneous wherein the at least one composition (C), as defined above, and the at least one fertilizer (Z), as defined above, are not uniformly distributed within the granular formulation (F_{G}). As discussed in detail below, said heterogeneous granular formulation (F_{G}) may be notably obtained by applying, in particular spraying the at least one composition (C) on at least part of the surface of the solid fertilizer (Z_{S}), as detailed above.

### METHODS TO MANUFACTURE FORMULATION (F):

The methods to manufacture formulation (F) are also an aspect of the present invention.

It is further understood that all definitions and preferences, as described above, equally apply for all further embodiments, as described below.

The formulation (F) of the present invention can be prepared by a variety of methods known in the art.

In one embodiment of the present invention, the method for the manufacturing of the liquid formulation (F_{L}), as detailed above, comprises intimate admixing of the at least one composition (C), as detailed above, the at least one fertilizer (Z), as detailed above, wherein said fertilizer (Z) is optionally dissolved in a solvent [solvent (sol), herein after], and optionally any additional ingredient (I_{F}), as detailed above.

Typically said intimate admixing of the at least one composition (C), as detailed above, the at least one fertilizer (Z), as detailed above, and any optional ingredient (I_{F}), as detailed above, may be carried out by using traditional mixers and blenders, high intensity mixers and electric stirrers.

It is understood that the skilled person in the art will carry out said intimate admixing according to general practice such as notably using optimal times, speeds, weights, volumes and batch quantities.

Among solvents (sol) suitable for dissolving the fertilizer (Z), in particular a solid fertilizer (Z), as detailed above, mention may be notably made of water.

Suitable methods for dissolving the fertilizer (Z) are notably described in U.S. Pat. No. 2,950,961 .

In another embodiment of the present invention, the method for the manufacturing of the solid formulation (F_{S}), as detailed above, comprises first intimate admixing of the at least one composition (C), as detailed above, the at least one fertilizer (Z), as detailed above and optionally any additional ingredient (I_{F}), as detailed above, into a homogeneous mixture wherein said homogeneous mixture may be further converted into a granular form such as granules, microcrumbs and regular crumbs or mixtures thereof. Such conversion methods are known in the art, such as notably described in U.S. Pat. No. 4,604,126.

Typically said intimate admixing of the at least one composition (C), as detailed above, the at least one fertilizer (Z), as detailed above, and any optional ingredient (I_{F}), as detailed above, into a homogeneous mixture may be carried out by using traditional mixers and blenders, high intensity mixers and electric stirrers.

It is understood that the skilled person in the art will carry out said intimate admixing according to general practice such as notably using optimal times, speeds, weights, volumes and batch quantities.

In a preferred embodiment of the present invention, the method for the manufacturing of the heterogeneous solid formulation (F_{S}), as detailed above, comprises applying, in particular spraying, the composition (C), as detailed above, on at least part of the surface of the solid fertilizer (Z_{S}), as detailed above.

The inventors have surprisingly found that spraying the at least one composition (C) on at least part of the surface of the solid fertilizer (Z_{S}) results in a heterogeneous solid formulation (F_{S}) providing an enhanced synergistic effect of the fertilizer (Z), as detailed above and composition (C), as detailed above, on the elimination of moss. Without being bound to this theory, such heterogeneous solid formulation (F_{S}) may enhance the direct availability of composition (C) and therefore may enhance the synergistic effect.

As an alternative to spraying, standard known coating techniques may be used, mention can notably be made of film coating, curtain coating, casting, coil coating, roller coating, gravure coating, reverse roll coating, dip coating, blade coating and the like.

### USE OF THE FORMULATION (F):

The use of the formulation (F),as detailed above, in particular the diluted liquid formulation (F_{L}), is also an aspect of the present invention.

It is further understood that all definitions and preferences, as described above, equally apply for all further embodiments, as described below.

The use of the formulation (F) of the present invention, in particular the diluted liquid formulation (F_{L}), comprises applying said formulation (F) to a locus or area to be treated for a possible moss infestation, such as but not limited to agricultural fields, turf and ornamentals, lawns, in between perennial plants, in borders or in other garden areas, in pots or containers comprising desirable plants (e.g. container cultivation and/or pot culture), between shrubs and nursery trees, rights of way, concrete pathways and driveways, etc.

For the purpose of this invention, the term "moss" is intended to denote any species of moss of the class Bryopsida such as for example, Bryum argenteum, any species of the division Bryophyta, any species of liverworts of class Marchantiopsida, and any species of hornworts of class Anthocerotopsida, and any other species commonly known as moss.

The formulation (F), in particular the diluted liquid formulation (F_{L}), may be applied to a broad area needing treatment in any suitable usual manner according to standard practice known by the skilled in the art taking into account factors such as temperature and weather conditions.

Among suitable manners for applying solid formulation (F_{S}), mention may be notably made of scattering, broadcasting by hand, dusting, sprinkling, pouring, and the like by using conventional equipment such as a centrifugal spreader, a drop spreader or a handspreader, and the like.

Among suitable manners for applying liquid formulation (F_{L}), in particular the diluted liquid formulation (F_{L}), mention may be notably made of spraying, atomizing, vaporizing, watering, squirting, sprinkling, pouring, fumigating, and the like by using conventional equipment such as a handpump, a backpack sprayer, a boomsprayer, and the like.

The skilled in the art will apply the formulation (F), in particular the diluted liquid formulation (F_{L}), in a dosage sufficient to effect the desired action. This dosage is dependent upon many factors, including the selectivity desired, the method and conditions of the application.

### EXAMPLES:

The invention will be now described in more details with reference to the following examples, whose purpose is merely illustrative and not intended to limit the scope of the invention.

### Example 1:

Aqueous dilutions of the liquid formulation (F_{L}) were applied to adjacent plots of lawn, plots of 20 by 25 cm, where a moss-infestation was clearly present. Different formulae, as listed in Table 1, were tested in duplicate and compared to a untreated control. Each formula was diluted and applied by spraying them uniformly over the plots resulting in an application of 100 mL of formula per square meter m². The used dilution results in a use of 0.92 mL of composition (C) per square meter m². The components of composition (C) are described in Table 1. The different treatments were randomly distributed over the different plots.
The moss condition on each plot was initially rated for on day 0. On day 0, all of the diluted formula were applied once. The moss condition of each plot was rated again on day 2 and day 4.

**TABLE 1**

| Formula | Components | Used dilution |
|---|---|---|
| 1 | Composition (C) includes 92.09 wt. % of compound (A) of general formula (Iₐ) wherein R³ is hydrogen and R', R¹, R ² are methyl groups; 1.06 wt. % of compound (B) of general formula (IIₐ) wherein R^{3a} is hydrogen and R^{a}, R^{1a}, R^{2a} are methyl groups; 2.02 wt. % of compound (D) of general formula (IIIₐ) wherein R^{b}, R^{1b}, R^{2b} are methyl groups; with all wt. % relative to the total weight of composition (C) | 1:100 |
| 2 | Liquid fertilizer (Z) with an NPK of 8-3-4 (N-rich fertilizer) | 1:10 |
| 3 | Formula 1 + Formula 2 in a ratio of 1:9 | 1:10 |
| 4 | Liquid fertilizer (Z) with an NPK of 4-8-4 (P-rich fertilizer) | 1:10 |
| 5 | Formula 1 + Formula 4 in a ratio of 1:9 | 1:10 |
| 6 | Liquid fertilizer (Z) (vinasse) with an NPK of 2-0-7 (K-rich fertilizer) | 1:10 |
| 7 | Formula 1 + Formula 6 in a ratio of 1:9 | 1:10 |

On day 0, day 2 and day 4 an assessment of the moss condition on the different plots was carried out by four observers (O1 - O4). The visual observations were converted to a mark from 0 to 10. Whereby 0 means no effect on the moss at all and 10 means a plot with only discolored and/or dead moss. The assessment is not based on the percentage of moss present in the plot but on the condition of the moss in the plot. The results of the assessment on day 0, day 2 and day 4 are listed in Table 2, Table 3 and Table 4 respectively.

**TABLE 2**

| Assessment on day 0 | | | | | | | | |
|---|---|---|---|---|---|---|---|---|
| **Formula** | **Observer O1** | | **Observer O2** | | **Observer O3** | | **Observer O4** | |
| | **Plot 1** | **Plot 2** | **Plot 1** | **Plot 2** | **Plot 1** | **Plot 2** | **Plot 1** | **Plot 2** |
| **Untreated control** | 0 | 0 | 0 | 1 | 0 | 1 | 0 | 0 |
| **1** | 0 | 0 | 0 | 1 | 0 | 1 | 0 | 0 |
| **2** | 1 | 0 | 1 | 0 | 0 | 0 | 0 | 0 |
| **3** | 0 | 1 | 0 | 0 | 0 | 1 | 0 | 1 |
| **4** | 0 | 0 | 1 | 0 | 0 | 0 | 0 | 0 |
| **5** | 0 | 0 | 0 | 1 | 0 | 1 | 0 | 0 |
| **6** | 1 | 0 | 1 | 0 | 0 | 0 | 0 | 0 |
| **7** | 1 | 1 | 0 | 1 | 0 | 1 | 1 | 0 |

**TABLE 3**

| Assessment on day 2 | | | | | | | | |
|---|---|---|---|---|---|---|---|---|
| **Formula** | **Observer O1** | | **Observer O2** | | **Observer O3** | | **Observer O4** | |
| | **Plot 1** | **Plot 2** | **Plot 1** | **Plot 2** | **Plot 1** | **Plot 2** | **Plot 1** | **Plot 2** |
| **Untreated control** | 1 | 1 | 0 | 1 | 0 | 1 | 0 | 0 |
| **1** | 5 | 7 | 6 | 6 | 6 | 7 | 5 | 6 |
| **2** | 2 | 2 | 1 | 2 | 1 | 1 | 1 | 2 |
| **3** | 8 | 8 | 7 | 8 | 8 | 9 | 7 | 8 |
| **4** | 3 | 2 | 2 | 2 | 2 | 2 | 1 | 3 |
| **5** | 7 | 6 | 7 | 7 | 8 | 8 | 7 | 7 |
| **6** | 1 | 1 | 0 | 1 | 1 | 1 | 1 | 1 |
| **7** | 8 | 8 | 7 | 9 | 8 | 9 | 7 | 8 |

**TABLE 4**

| Assessment on day 4 | | | | | | | | |
|---|---|---|---|---|---|---|---|---|
| **Formula** | **Observer O1** | | **Observer O2** | | **Observer O3** | | **Observer O4** | |
| | **Plot 1** | **Plot 2** | **Plot 1** | **Plot 2** | **Plot 1** | **Plot 2** | **Plot 1** | **Plot 2** |
| **Untreated control** | 1 | 0 | 0 | 1 | 1 | 1 | 0 | 0 |
| **1** | 5 | 7 | 6 | 7 | 6 | 7 | 5 | 6 |
| **2** | 2 | 2 | 1 | 2 | 2 | 1 | 1 | 2 |
| **3** | 8 | 8 | 7 | 8 | 8 | 9 | 7 | 8 |
| **4** | 3 | 2 | 3 | 2 | 2 | 2 | 1 | 3 |
| **5** | 7 | 7 | 8 | 7 | 8 | 8 | 7 | 7 |
| **6** | 1 | 1 | 0 | 1 | 1 | 1 | 2 | 1 |
| **7** | 8 | 9 | 8 | 9 | 8 | 9 | 9 | 8 |

From the observations as described in Table 2, Table 3 and Table 4 averages were calculated and listed in Table 5.

**TABLE 5**

| Average condition of the moss | | | |
|---|---|---|---|
| **Formula** | **Day 0** | **Day 2** | **Day 4** |
| **Untreated control** | 0.25 | 0.5 | 0.5 |
| **1** | 0.25 | 6.0 | 6.1 |
| **2** | 0.25 | 1.5 | 1.6 |
| **3** | 0.38 | 7.9 | 7.9 |
| **4** | 0.13 | 2.1 | 2.3 |
| **5** | 0.25 | 7.1 | 7.4 |
| **6** | 0.25 | 0.9 | 1.0 |
| **7** | 0.63 | 8.0 | 8.5 |

The obtain a value for the effectiveness in eliminating moss of the different formulations, the marks for the moss condition on day 0, listed in Table 5, was subtracted from the marks for the moss condition on day 2, listed in Table 5. The same calculation was performed for day 4. Afterwards the resulting effectiveness values of day 2 and day 4 were converted to percentage values and an average percentage was calculated from the percentage on day 2 and day 4. The results are shown in Table 6. The higher the value, the stronger is the moss-eliminating effect.

**TABLE 6**

| Moss-eliminating effect | | | |
|---|---|---|---|
| **Formula** | **Day 2** | **Day 4** | **Average %** |
| **1** | 5.5 | 5.6 | 55.5 |
| **2** | 1.0 | 1.1 | 10.5 |
| **3** | 7.4 | 7.4 | 74 |
| **4** | 1.6 | 1.8 | 17 |
| **5** | 6.6 | 6.9 | 67.5 |
| **6** | 0.4 | 0.5 | 4.5 |
| **7** | 7.5 | 8.0 | 77.5 |

The results in Table 6 show that composition (C) (formula 1) has an average moss-eliminating effect of 55.5%. The N-rich, P-rich and K-rich fertilizers have an average moss-eliminating effect of 10.5%, 17% and 4.5% respectively (formula 2, 4 and 6 respectively). The addition of a fertilizer synergistically enhances the effect of composition (C) on the elimination of moss from 55.5% (formula 1) to about 73% on average (74% when a N-fertilizer is added (formula 3), 67.5% when a P-fertilizer is added (formula 5) and 77.5% when a K-fertilizer is added (formula 7)). These results show that the synergistic effect on the elimination of moss can only be achieved by the combination of fertilizer (Z) with composition (C).

## Claims

1. A formulation [formulation (F), herein after] comprising:
(i) at least one composition [composition (C), herein after] wherein said composition (C) comprises at least one compound (A) of formulae (Iₐ) herein below: 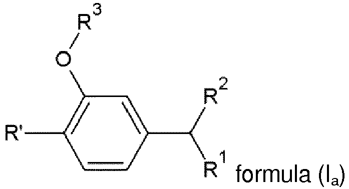 wherein
- R³ is independently selected from hydrogen; an alkyl group having 1 to 4 carbon atoms; -C(O)-R^{α} wherein R^{α} is an alkyl group having 1 to 4 carbon atoms;;
- R' is independently selected from an alkyl group having 1 to 4 carbon atoms;
- R¹ and R², equal to or different from each other, are independently selected from an alkyl group having 1 to 6 carbon atoms;
(ii) at least one fertilizer [fertilizer (Z), herein after], wherein the fertilizer (Z) is an organic fertilizer [organic fertilizer (Z_{O}), herein after] or an organo-mineral fertilizer [fertilizer (Z_{OM}), herein after], wherein said organic fertilizer (Z_{O}) and organo-mineral fertilizer (Z_{OM}) comprise a weight ratio of nitrogen atoms to phosphorus atoms and potassium atoms respectively and/or a weight ratio of potassium atoms to nitrogen atoms and phosphorus atoms respectively and/or a weight ratio of phosphorus atoms to nitrogen atoms and potassium atoms respectively, which is equal to or at least 2 or mixtures thereof;
(iii) optionally at least one additional ingredient [ingredient (I_{F}), herein after]
wherein the compound (A) is present in an amount of at least 0.4 weight percent [wt. %, herein after], relative to the total weight of the formulation (F).

2. The formulation (F), according to claim 1, wherein composition (C) may further comprise at least one compound of general formula (IIₐ) [compound (B), herein after] and/or at least one compound of general formula (IIIₐ) [compound (D), herein after]: 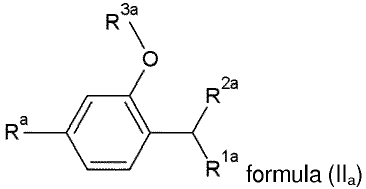 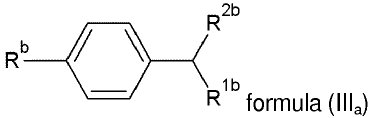 wherein
- R^{3a} is independently selected from hydrogen; an alkyl group having 1 to 4 carbon atoms -C(O)-R^{αa} wherein R^{αa} is an alkyl group having 1 to 4 carbon atoms;
- R^{a} is independently selected from an alkyl group having 1 to 4 carbon atoms;
- R^{1a} and R^{2a}, equal to or different from each other, are independently selected from an alkyl group having 1 to 6 carbon atoms;
- R^{b} is independently selected from an alkyl group having 1 to 4 carbon atoms;
- R^{1b} and R^{2b}, equal to or different from each other, are independently selected from an alkyl group having 1 to 6 carbon atoms.

3. The formulation (F), according to any one of claims 1 or 2, wherein the compound (A) is present in an amount equal to or less than 50 wt. %, relative to the total weight of the formulation (F).

4. The formulation (F), according to any one of claims 1 to 3, wherein the composition (C) is derived from natural sources, in particular plant extracts selected from the group consisting of extracts of Allium sp., Aloysia sp., Anethum sp., Anthriscus sp., Armorica sp., Artemisia sp., Borago sp., Capsicum sp., Carum sp., Chamaemelum sp., Chelidonium sp., Coriandrum sp., Cymbopogon sp., Foeniculum sp., Hyssopus sp., Lavandula sp., Laurus sp., Levisticum sp., Lippia sp., Melissa sp., Mentha sp., Monarda sp., Myrrhis sp., Ocimum sp., Origanum sp., Pelargonium sp., Pimpinella sp., Rosmarinus sp., Ruta sp., Salvia sp., Sanguisorba sp., Satureja sp., Thymus sp., Valeriana sp..

5. The formulation (F), according to any one of claims 1 to4, wherein the fertilizer (Z) is a liquid fertilizer [liquid fertilizer (Z_{L}) herein after] and the weight percent of the compound (A), relative to the total weight of formulation (F), is equal to or at least 0.4 wt. % and equal to or less than 50 wt. %.

6. The formulation (F), according to any one of claims 1 to 4, wherein the fertilizer (Z) is a solid fertilizer [solid fertilizer (Z_{S}) herein after] wherein the weight percent of compound (A), relative to the total weight of formulation (F), is equal to or at least 0.4 wt. % and equal to or less than 20 wt. %.

7. The formulation (F), according to any one of claims 1 to 5, wherein the fertilizer (Z) is a liquid fertilizer (Z_{L}) wherein the weight percent of the liquid fertilizer (Z_{L}), relative to the total weight of the formulation (F) is equal to or at least 50 wt. % and equal to or less than 99.6 wt. %.

8. The formulation (F), according to any one of claims 1 to 4 and claim 6, wherein the fertilizer (Z) is a solid fertilizer (Z_{S}) wherein the weight percent of the solid fertilizer (Z_{S}), relative to the total weight of the formulation (F), is equal to or at least 80 wt. % and equal to or less than 99.6 wt. %.

9. The formulation (F), according to any one of claims 1 to 8, wherein the formulation (F) is a liquid formulation [liquid formulation (F_{L}), herein after] or a solid formulation [solid formulation (F_{S}), herein after] wherein said solid formulation (F_{S}) is a homogeneous or heterogeneous solid formulation (F_{S}).

10. A diluted liquid formulation obtained by diluting the liquid formulation (F_{L}), according to claim 9, with a diluent wherein the weight ratio of liquid formulation (F_{L}) to diluent (dil) is between 1:8 to about 1:25.

11. A method for the manufacturing of the liquid formulation (F_{L}) according to claim 9 comprises intimate admixing of the at least one composition (C), the at least one fertilizer (Z), wherein said fertilizer (Z) is optionally dissolved in a solvent, and optionally any additional ingredient (I_{F}).

12. A method for the manufacturing of the heterogeneous solid formulation (F_{S}) according to claim 9 comprises applying the composition (C) on at least part of the surface of the solid fertilizer (Z_{S}) according to claim 8.

13. A use of the formulation (F) according to any one of claims 1 to 9 or of the diluted liquid formulation (F_{L}) according to claim 10 comprises applying said formulation (F) to a locus or area to be treated for a possible moss infestation, such as but not limited to agricultural fields, turf and ornamentals, lawns, in between perennial plants, in borders or in other garden areas, in pots or containers comprising desirable plants (e.g. container cultivation and/or pot culture), between shrubs and nursery trees, rights of way, concrete pathways and driveways.

## Patentansprüche

1. Eine Rezeptur [nachstehend Rezeptur (F)], welche Folgendes umfasst:
(i) zumindest eine Zusammensetzung [nachstehend Zusammensetzung (C)], wobei die erwähnte Zusammensetzung (C) zumindest eine Verbindung (A) der Formel (Iₐ) unten umfasst: 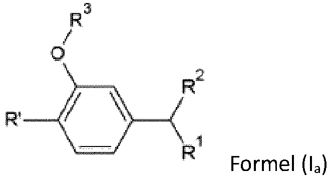 wobei
- R³ unabhängig ausgewählt ist aus Wasserstoff; einer Alkylgruppe mit 1 bis 4 Kohlenstoffatomen; -C(O)-R^{α}, wobei R^{α} eine Alkylgruppe mit 1 bis 4 Kohlenstoffatomen ist;
- R' unabhängig ausgewählt ist aus einer Alkylgruppe mit 1 bis 4 Kohlenstoffatomen;
- R¹ und R², gleich oder unterschiedlich voneinander, unabhängig ausgewählt sind aus einer Alkylgruppe mit 1 bis 6 Kohlenstoffatomen;
(ii) zumindest einen Dünger [nachstehend Dünger (Z)], wobei der Dünger (Z) ein organischer Dünger [nachstehend organischer Dünger (Z_{O})] oder ein organisch-mineralischer Dünger [nachstehend Dünger (Z_{OM})] ist, wobei der erwähnte organische Dünger (Z_{O}) und organisch-mineralische Dünger (Z_{OM}) ein Gewichtsverhältnis von Stickstoffatomen zu respektive Phosphoratomen und Kaliumatomen und/oder ein Gewichtsverhältnis von Kaliumatomen zu respektive Stickstoffatomen und Phosphoratomen und/oder ein Gewichtsverhältnis von Phosphoratomen zu respektive Stickstoffatomen und Kaliumatomen haben, das gleich oder mindestens 2 oder Mischungen davon ist;
(iii) optional zumindest ein zusätzliches Ingrediens [nachstehend Ingrediens (I_{F})]
wobei die Verbindung (A) in einer Menge von mindestens 0.4 Gewichtsprozent [nachstehend Gew.-%] in Bezug zum Gesamtgewicht der Rezeptur (F) vorhanden ist.

2. Die Rezeptur (F), nach Anspruch 1, wobei Zusammensetzung (C) ferner zumindest eine Verbindung der allgemeinen Formel (IIₐ) [nachstehend Verbindung (B)] und/oder zumindest eine Verbindung der allgemeinen Formel (IIIₐ) [nachstehend Verbindung (D)] umfassen kann: 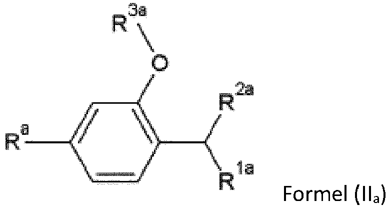 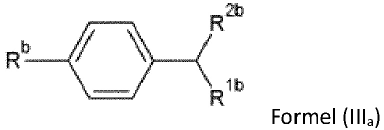 wobei
- R^{3a} unabhängig ausgewählt ist aus Wasserstoff; einer Alkylgruppe mit 1 bis 4 Kohlenstoffatomen; -C(O)-R^{αa}, wobei R^{αa} eine Alkylgruppe mit 1 bis 4 Kohlenstoffatomen ist;
- R^{a} unabhängig ausgewählt ist aus einer Alkylgruppe mit 1 bis 4 Kohlenstoffatomen;
- R^{1a} und R^{2a}, gleich oder unterschiedlich voneinander, unabhängig ausgewählt sind aus einer Alkylgruppe mit 1 bis 6 Kohlenstoffatomen;
- R^{b} unabhängig ausgewählt ist aus einer Alkylgruppe mit 1 bis 4 Kohlenstoffatomen;
- R^{1b} und R^{2b}, gleich oder unterschiedlich voneinander, unabhängig ausgewählt sind aus einer Alkylgruppe mit 1 bis 6 Kohlenstoffatomen.

3. Die Rezeptur (F), nach irgendeinem der Ansprüche 1 oder 2, wobei die Verbindung (A) in einer Menge von gleich oder weniger als 50 Gew.-%, in Bezug auf das Gesamtgewicht der Rezeptur (F), vorhanden ist.

4. Die Rezeptur (F), nach irgendeinem der Ansprüche 1 bis 3, wobei die Zusammensetzung (C) aus natürlichen Quellen abgeleitet ist, insbesondere Pflanzenextrakte ausgewählt aus der Gruppe bestehend aus Extrakten von Allium sp., Aloysia sp., Anethum sp., Anthriscus sp., Armorica sp., Artemisia sp., Borago sp., Capsicum sp., Carum sp., Chamaemelum sp., Chelidonium sp., Coriandrum sp., Cymbopogon sp., Foeniculum sp., Hyssopus sp., Lavandula sp., Laurus sp., Levisticum sp., Lippia sp., Melissa sp., Mentha sp., Monarda sp., Myrrhis sp., Ocimum sp., Origanum sp., Pelargonium sp., Pimpinella sp., Rosmarinus sp., Ruta sp., Salvia sp., Sanguisorba sp., Satureja sp., Thymus sp., Valeriana sp..

5. Die Rezeptur (F), nach irgendeinem der Ansprüche 1 bis 4, wobei der Dünger (Z) ein flüssiger Dünger [nachstehend flüssiger Dünger (Z_{L})] ist und der Gewichtsanteil der Verbindung (A), in Bezug zum Gesamtgewicht der Rezeptur (F), gleich oder mindestens 0.4 Gew.-% und gleich oder weniger als 50 Gew.-% ist.

6. Die Rezeptur (F), nach irgendeinem der Ansprüche 1 bis 4, wobei der Dünger (Z) ein fester Dünger [nachstehend fester Dünger (Z_{S})] ist, wobei der Gewichtsanteil der Verbindung (A), in Bezug zum Gesamtgewicht der Rezeptur (F), gleich oder mindestens 0.4 Gew.-% und gleich oder weniger als 20 Gew.-% ist.

7. Die Rezeptur (F), nach irgendeinem der Ansprüche 1 bis 5, wobei der Dünger (Z) ein flüssiger Dünger (Z_{L}) ist, wobei der Gewichtsanteil des flüssigen Düngers (Z_{L}), in Bezug zum Gesamtgewicht der Rezeptur (F), gleich oder mindestens 50 Gew.-% und gleich oder weniger als 99.6 Gew.-% ist.

8. Die Rezeptur (F), nach irgendeinem der Ansprüche 1 bis 4 und Anspruch 6, wobei der Dünger (Z) ein fester Dünger (Z_{S}) ist, wobei der Gewichtsanteil des festen Düngers (Z_{S}), in Bezug zum Gesamtgewicht der Rezeptur (F), gleich oder mindestens 80 Gew.-% und gleich oder weniger als 99.6 Gew.-% ist.

9. Die Rezeptur (F), nach irgendeinem der Ansprüche 1 bis 8, wobei die Rezeptur (F) eine flüssige Rezeptur [nachstehend flüssige Rezeptur (F_{L})] oder eine feste Rezeptur [nachstehend feste Rezeptur (F_{S})] ist, wobei die erwähnte feste Rezeptur (F_{S}) eine homogene oder heterogene feste Rezeptur (F_{S}) ist.

10. Eine verdünnte flüssige Rezeptur, erhalten durch Verdünnen der flüssigen Rezeptur (F_{L}), nach Anspruch 9, mit einem Verdünnungsmittel, wobei das Gewichtsverhältnis von flüssiger Rezeptur (F_{L}) zu Verdünnungsmittel (dil) zwischen 1:8 und etwa 1:25 beträgt.

11. Ein Verfahren zur Herstellung der flüssigen Rezeptur (F_{L}) nach Anspruch 9 umfasst inniges Vermischen der zumindest einen Zusammensetzung (C), des zumindest einen Düngers (Z), wobei der erwähnte Dünger (Z) optional in einem Lösungsmittel aufgelöst ist, und optional jedes zusätzlichen Ingrediens (I_{F}).

12. Ein Verfahren zur Herstellung der heterogenen festen Rezeptur (F_{S}) nach Anspruch 9 umfasst das Aufbringen der Zusammensetzung (C) auf zumindest einen Teil der Oberfläche des festen Düngers (Z_{S}) nach Anspruch 8.

13. Die Verwendung der Rezeptur (F) nach irgendeinem der Ansprüche 1 bis 9 oder der verdünnten flüssigen Rezeptur (FL) nach Anspruch 10 umfasst das Aufbringen der erwähnten Rezeptur (F) auf einen Ort oder Bereich, der wegen eines möglichen Moosbefalls behandelt werden muss, wie beispielsweise, aber nicht darauf beschränkt, auf landwirtschaftliche Flächen, Rasen und Zierpflanzen, Grünflächen, zwischen mehrjährigen Pflanzen, in Rabatten oder in anderen Gartenbereichen, in Töpfen oder Behältern, die erwünschte Pflanzen enthalten (z. B. Containerkultur und/oder Topfkultur), zwischen Sträuchern und Baumschulgehölzen, auf Durchfahrten, Betonpfaden und Auffahrten.

## Revendications

1. Formulation [formulation (F), ci-après] comprenant :
(i) au moins une composition [composition (C), ci-après] dans laquelle ladite composition (C) comprend au moins un composé (A) de formules (Iₐ) ci-dessous: 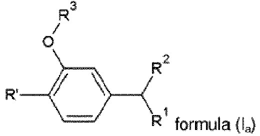 dans laquelle
- R³ est choisi indépendamment parmi l'hydrogène ; un groupe alkyle ayant 1 à 4 atomes de carbone ; -C(O)-R^{α} où R^{α} est un groupe alkyle ayant 1 à 4 atomes de carbone;
- R' est choisi indépendamment parmi un groupe alkyle ayant 1 à 4 atomes de carbone;
- R¹ et R², identiques ou différents l'un de l'autre, sont choisis indépendamment parmi un groupe alkyle ayant 1 à 6 atomes de carbone;
(ii) au moins un engrais [engrais (Z), ci-après], où l'engrais (Z) est un engrais organique [engrais organique (Z_{O}), ci-après] ou un engrais organo-minéral [engrais (Z_{OM}), ci-après], où ledit engrais organique (Z_{O}) et ledit engrais organo-minéral (Z_{OM}) comprennent un rapport pondéral des atomes d'azote aux atomes de phosphore et aux atomes de potassium respectivement et/ou un rapport pondéral des atomes de potassium aux atomes d'azote et aux atomes de phosphore respectivement et/ou un rapport pondéral des atomes de phosphore aux atomes d'azote et aux atomes de potassium respectivement, qui est égal à ou au moins 2 ou leurs mélanges;
(iii) facultativement au moins un ingrédient supplémentaire [ingrédient (I_{F}), ci-après]
dans laquelle le composé (A) est présent en une quantité d'au moins 0.4 % en poids [% en poids, ci-après], par rapport au poids total de la formulation (F).

2. Formulation (F), selon la revendication 1, dans laquelle la composition (C) peut en outre comprendre au moins un composé de formule générale (IIₐ) [composé (B), ci-après] et/ou au moins un composé de formule générale (IIIₐ) [composé (D), ci-après]: 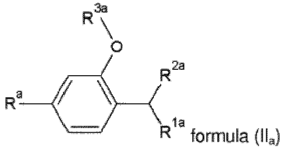 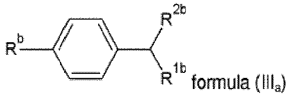 dans laquelle
- R^{3a} est choisi indépendamment parmi l'hydrogène ; un groupe alkyle ayant 1 à 4 atomes de carbone -C(O)-R^{αa} où R^{αa} est un groupe alkyle ayant 1 à 4 atomes de carbone;
- R^{a} est choisi indépendamment parmi un groupe alkyle ayant 1 à 4 atomes de carbone;
- R^{1a} et R^{2a}, identiques ou différents l'un de l'autre, sont choisis indépendamment parmi un groupe alkyle ayant 1 à 6 atomes de carbone ;
- R^{b} est choisi indépendamment parmi un groupe alkyle ayant 1 à 4 atomes de carbone;
- R^{1b} et R^{2b}, identiques ou différents l'un de l'autre, sont choisis indépendamment parmi un groupe alkyle ayant 1 à 6 atomes de carbone.

3. Formulation (F), selon l'une quelconque des revendications 1 ou 2, dans laquelle le composé (A) est présent en une quantité égale ou inférieure à 50 % en poids, par rapport au poids total de la formulation (F).

4. Formulation (F), selon l'une quelconque des revendications 1 à 3, dans laquelle la composition (C) est dérivée de sources naturelles, en particulier d'extraits végétaux choisis dans le groupe constitué des extraits d'Allium sp., Aloysia sp., Anethum sp., Anthriscus sp., Armorica sp., Artemisia sp., Borago sp., Capsicum sp., Carum sp., Chamaemelum sp., Chélidonium sp., Coriandrum sp., Cymbopogon sp., Foeniculum sp., Hyssopus sp., Lavandula sp., Laurus sp., Levisticum sp., Lippia sp., Melissa sp., Mentha sp., Monarda sp., Myrrhis sp., Ocimum sp., Origanum sp., Pelargonium sp., Pimpinella sp., Rosmarinus sp., Ruta sp., Salvia sp., Sanguisorba sp., Satureja sp., Thymus sp., Valeriana sp..

5. Formulation (F), selon l'une quelconque des revendications 1 à 4, dans laquelle l'engrais (Z) est un engrais liquide [engrais liquide (Z_{L} ci-après)] et le pourcentage en poids du composé (A), par rapport au poids total de la formulation (F), est égal ou supérieur à 0.4 % en poids et inférieur ou égal à 50 % en poids.

6. Formulation (F), selon l'une quelconque des revendications 1 à 4, dans laquelle l'engrais (Z) est un engrais solide [engrais solide (Z_{S}) ci-après] dans laquelle le pourcentage en poids du composé (A), par rapport au poids total de la formulation (F), est égal ou supérieur à 0.4 % en poids et inférieur ou égal à 20 % en poids.

7. Formulation (F), selon l'une quelconque des revendications 1 à 5, dans laquelle l'engrais (Z) est un engrais liquide (Z_{L}), où le pourcentage en poids de l'engrais liquide (Z_{L}), par rapport au poids total de la formulation (F), est égal ou supérieur à 50 % en poids et inférieur ou égal à 99.6 % en poids.

8. Formulation (F), selon l'une quelconque des revendications 1 à 4 et 6, dans laquelle l'engrais (Z) est un engrais solide (Z_{S}), où le pourcentage en poids de l'engrais solide (Z_{S}), par rapport au poids total de la formulation (F), est égal ou supérieur à 80 % en poids et inférieur ou égal à 99.6 % en poids.

9. Formulation (F), selon l'une quelconque des revendications 1 à 8, dans laquelle la formulation (F) est une formulation liquide [formulation liquide (F_{L}), ci-après] ou une formulation solide [formulation solide (F_{S}), ci-après] dans laquelle ladite formulation solide (F_{S}) est une formulation solide homogène ou hétérogène (F_{S}).

10. Formulation liquide diluée obtenue en diluant la formulation liquide (F_{L}), selon la revendication 9, avec un diluant dans laquelle le rapport pondéral de la formulation liquide (F_{L}) au diluant (dil) est compris entre 1:8 et environ 1:25.

11. Procédé de fabrication de la formulation liquide (F_{L}) selon la revendication 9 comprend le mélange intime de ladite au moins une composition (C), dudit au moins un engrais (Z), dans lequel ledit engrais (Z) est éventuellement dissous dans un solvant, et éventuellement tout ingrédient supplémentaire (I_{F}).

12. Procédé de fabrication de la formulation solide hétérogène (F_{S}) selon la revendication 9 comprend l'application de la composition (C) sur au moins une partie de la surface de l'engrais solide (Z_{S}) selon la revendication 8.

13. Utilisation de la formulation (F) selon l'une quelconque des revendications 1 à 9 ou de la formulation liquide diluée (F_{L}) selon la revendication 10, comprenant l'application de ladite formulation (F) à un lieu ou une zone à traiter pour une infestation éventuelle par la mousse, telle que mais non limitée aux champs agricoles, gazon et plantes ornementales, pelouses, entre des plantes vivaces, dans des bordures ou dans d'autres zones du jardin, en pots ou conteneurs comprenant des plantes désirables (e.g. culture en conteneur et/ou en pot), entre arbustes et arbres de pépinière, droits de passage, allées en béton et allées pour voiture.
